# EUROPÄISCHE PATENTSCHRIFT

(11) **EP 0 587 918 B1**
(45) Veröffentlichungstag und Bekanntmachung des Hinweises auf die Patenterteilung: **03.11.1999**
(21) Anmeldenummer: 92114159.4
(22) Anmeldetag: 19.08.1992
(51) Int. Cl.: G06F 12/08, G06F 13/42

(54) **Multiprozessorsystem mit Cache-Speichern**
Multiprocessorsystem with caches
Système multiprocesseur avec antémémoires

(43) Veröffentlichungstag der Anmeldung: 23.03.1994
(73) Patentinhaber: Siemens Nixdorf Informationssysteme Aktiengesellschaft, 33102 Paderborn (DE)
(72) Erfinder: Sachs, Harald, Dipl.-Ing., W-8011 Hofolding (DE)
(74) Vertreter: Epping, Wilhelm, Dr.-Ing.

(56) Entgegenhaltungen:
- EP-A- 0 347 040
- COMPUTER DESIGN. Bd. 30, Nr. 14, November 1991, LITTLETON, MASSACHUSETTS US Seiten 26 - 35 ANDREWS 'Serial bus extension boosts VMEbus performance ten-fold'

## Beschreibung

Die Erfindung betrifft ein Multiprozessorsystem gemäß dem Oberbegriff des Anspruchs 1.

Bei einer heute üblichen Klasse von eng gekoppelten Multiprozessoren sind alle Prozessoren und alle Arbeitsspeicherblöcke an einen sehr leistungsfähigen, parallelen Systembus angeschlossen. Über diesen Bus werden alle Speicherzugriffe ausgeführt. Derartige Busse weisen beispielsweise 60 bis 120 Leitungen auf. Der Futurebus ist ein solcher Hochleistungsbus.

Der parallele Systembus ermöglicht, daß die Cache-Speicher der Prozessoren ohne großen Aufwand konsistent gehalten werden können. Da alle Speicherzugriffe über den einen, allen Prozessoren zugänglichen Bus stattfinden, kann jeder Prozessor den Zugriff eines anderen Prozessors mitverfolgen. Auf dieser allgemeinen Sichtbarkeit der Systembusabläufe basieren verschiedene Cache-Speicher-Konsistenzprotokolle. Aus Computer, IEEE, 1990, Seiten 12 - 24 sind beispielsweise "Snoopy"-Cache-Protokolle bekannt. Die Anwendung solcher Protokolle ist beispielsweise aus EP-A-0 347 040 bekannt.

Der Nachteil eines zentralen Parallelbusses ist, daß ab einer vorgegebenen Anzahl von Prozessoren der zentrale Bus zum Engpaß für das System wird. Eine weitere Steigerung der Prozessorzahl wirkt sich nicht mehr leistungssteigernd für das Prozessorsystem aus.

Um trotzdem eine Leistungssteigerung zu erhalten, ist es bekannt, komplexe Verbindungsnetzwerke zum Verbinden der Systemkomponenten einzusetzen. Bei diesen Netzwerken sind aber die Speicherzugriffe der einzelnen Systemkomponenten nicht mehr von allen anderen Systemkomponenten aus beobachtbar. Hier müssen Konsistenzprotokolle angewendet werden, die auf "directories" basieren. Sie sind aufwendig zu implementieren und mindern ganz erheblich die Systemleistung.

Neben den Parallelbussen sind auch serielle Hochgeschwindigkeitsbusse allgemein bekannt. Aus Elektronik, Heft 22, 1991, Seiten 30 - 32 ist ein serieller Hochgeschwindigkeitsbus namens "Autobahn" bekannt. Aus "Computer Design", Bd.30, Nr. 14, Nov.1991, Littleton, Massachusetts, US, ist eine Anwendung solcher Busse bekannt. Dort dienen sie zur Unterstützung eines vorhandenen Parallelbusses.

Aufgabe der Erfindung ist es, ein Multiprozessorsystem der eingangs genannten Art anzugeben, das den Einsatz einer möglichst großen Anzahl von Systemkomponenten bei einer minimalen Anzahl von benötigten Busleitungen erlaubt. Gleichzeitig soll die Bedingung der Konsistenz der im System enthaltenen Cache-Speicher auf einfache Weise erfüllbar sein.

Diese Aufgabe wird erfindungsgemäß durch die im kennzeichnenden Teil des Anspruchs 1 angegebenen Merkmale gelöst. Es können danach eine hohe Zahl an Systemkomponenten bei minimaler Anzahl von Busleitungen betrieben werden. Desweiteren wird die Bedingung der Aufrechterhaltung der Konsistenz der Inhalte der im System enthaltenen Cache-Speicher erfüllt. Dies sogar auf einfache Weise, weil die einfachen und besonders effektiven Konsistenzprotokolle der Einbus-Lösung auf das große Multiprozessorsystem mit der Vielzahl der parallel angeordneten seriellen Hochgeschwindigkeitsbusse übertragen werden kann, so daß komplexe Verbindungsnetzwerke nicht nötig sind.

Vorteilhafte Ausgestaltungen der Erfindung sind Gegenstand der Unteransprüche.

Nachfolgend wird ein Ausführungsbeispiel der Erfindung anhand einer Zeichnung näher erläutert. Darin zeigen
Figur 1 und 2 jeweils ein Ausführungsbeispiel eines Multiprozessorsystems gemäß dem Stand der Technik und
Figur 3 ein Ausführungsbeispiel eines Multiprozessorsystems gemäß der Erfindung.

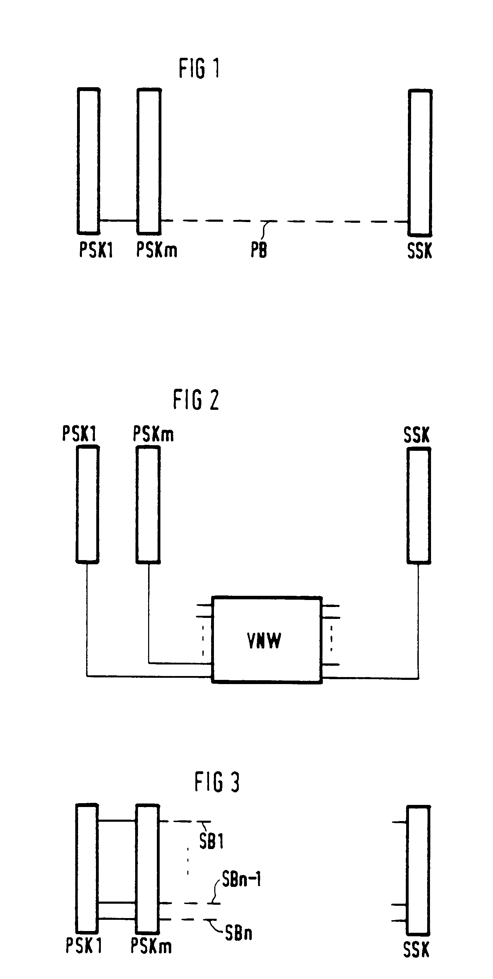

Bei dem in der Figur 1 gezeigten Multiprozessorsystem handelt es sich um ein Einbus-Multiprozessorsystem. Es besteht aus einer Vielzahl von Systemkomponenten, die hier durch eine erste Prozessor-Systemkomponente PSK1, eine m-te Prozessor-Systemkomponente PSKm und eine Speicher-Systemkomponente SSK angedeutet sind. Kombinationen mit mehreren Speicher- und weiteren Prozessor-Systemkomponenten sind denkbar. Die Prozessor-Systemkomponenten PSK1, PSKm enthalten Cache-Speicher.

Die Systemkomponenten sind durch einen zentralen Parallelbus PB miteinander verbunden. Über den zentralen Parallelbus PB erfolgt die Busarbitrierung und der Datenaustausch zwischen den Systemkomponenten. Die Prozesssor-Systemkomponenten PSK1, PSKm können Prozessoren oder Prozessorcluster umfassen.

An den Parallelbus PB können zehn bis dreißig der erwähnten Prozessor-Systemkomponenten PSK1, PSKm angeschlossen werden. Werden weitere Prozessor-Systemkomponenten angeschlossen, wird der zentrale Parallelbus PB zum Engpaß für das System.

In der Figur 2 ist mit den gleichen Systemkomponenten wie in der Figur 1 ein zweites Multiprozessorsystem aufgebaut. Bei diesem Multiprozessorsystem werden aber die Verbindungen der einzelnen Systemkomponenten PSK1, PSKm, SSK untereinander durch ein Verbindungsnetzwerk VNW bewerkstelligt. Das Verbindungsnetzwerk VNW ermöglicht zwar den Anschluß einer Zahl von Prozessor-Systemkomponenten größer 30, trennt aber einen Übertragungskanal von den übrigen Verbindungsmöglichkeiten ab. Speicherzugriffe können somit nicht mehr ohne weiteres von allen Prozessor-Systemkomponenten PSK1, PSKm beobachtet werden. Die Bedingung der Aufrechterhaltung der Konsistenz der im System enthaltenen Cache-Speicher kann damit nicht mehr einfach erfüllt werden.

In der Figur 3 ist ein Mehrbus-Multiprozessorsystem gezeigt, das wieder die gleichen Systemkomponenten wie in den Figuren 1 oder 2 aufweist. Anstelle des Parallelbusses PB in Figur 1 bzw. des Verbindungsnetzwerkes VNW in der Figur 2 sind hier in einer parallelen Anordnung viele serielle Hochgeschwindigkeitsbusse SB1, SBn-1, SBn verwendet. Die verschiedenen Systemkomponenten PSKl, PSKm, SSK sind gleichzeitig jeweils an alle seriellen Hochgeschwindigkeitsbusse SB1, SBn-1, SBn angeschlossen. Bei den seriellen Hochgeschwindigkeitsbussen SB1, SBn-1, SBn kann es sich beispielsweise um den seriellen Hochgeschwindigkeitsbus "Autobahn" handeln. Die seriellen Hochgeschwindigkeitsbusse SB1, SBn-1, SBn weisen eine Übertragungsrate von über vier Gigabit/sec auf. Es können damit, wie bei einem Parallelbus, jeweils zehn bis dreißig Prozessor-Systemkomponenten PSK1, PSKm angeschlossen werden. Werden beispielsweise zwanzig solcher seriellen Hochgeschwindigkeitsbusse vorgesehen, lassen sich damit Multiprozessorsysteme mit 200 bis 600 Prozessor-Systemkomponenten aufbauen.

Wenn für die Busarbitrierung ein "Local Area Network"-ähnliches Schema wie zum Beispiel Token-Bus (IEEE 802.4) oder CSMA/CD (Carrier Sense Multiple Access/Collision) verwendet wird, werden nur zwei Leitungen für einen Bus benötigt. Bei zwanzig seriellen Hochgeschwindigkeitsbussen sind das nur vierzig Busleitungen.

CSMA/CD ist eine spezielle Technik, um mehreren Sendern, die gleichzeitig einen Bus benutzen wollen, durch Messen am Bus und Warten bzw. verzögertes Wiedersenden bei "Collisions" nacheinander die Busbenutzung zu ermöglichen.

Bei anderen Arbitrierungsschemen wird für jeden seriellen Zwei-Draht-Übertragungsbus ein weiterer Zwei-Draht-Arbitrierungsbus benötigt. Gegenüber der vorigen Lösung verdoppelt sich zwar die Anzahl der benötigten Drähte auf vier, aber diese Zahl ist gemessen an der Größe des aufbaubaren Multiprozessorsystems immer noch hinreichend klein.

Die einzelnen Prozessor-Systemkomponenten PSKl, PSKm können ihre Cache-Speicher ohne weiteres über ein für serielle Einbus-Lösungen entworfenes Konsistenz-Protokoll, beispielsweise ein nach einem "Snoopy"-Prinzip arbeitendes Konsistenz-Protokoll, konsistent halten, da für alle Prozessor-Systemkomponenten PSKl, PSKm Speicherzugriffe beobachtbar sind. Hierzu weisen alle Prozessor-Systemkomponenten PSKl, PSKm jeweils für jeden seriellen Hochgeschwindigkeitsbus eine nach dem "Snoopy"-Prinzip arbeitende Einrichtung auf.

Durch die parallele Anordnung einer Vielzahl von seriellen Hochgeschwindigkeitsbussen ergibt sich ferner der Vorteil, ein fehlertolerantes Multiprozessorsystem aufbauen zu können. Fehlerhafte Verbindungsstrecken können nämlich sehr leicht umgangen werden.

## Patentansprüche

1. Multiprozessorsystem mit einem wenigstens einen seriellen Hochgeschwindigkeitsbus beinhaltenden Systembus und mit an den Systembus jeweils angeschlossenen Systemkomponenten, die zum Teil aus Cache-Speicher aufweisenden Prozessor-Systemkomponenten bestehen, die Mittel zur Aufrechterhaltung der Konsistenz der Inhalte der Cache-Speicher bei über den Systembus erfolgenden Speicherzugriffen enthalten, **dadurch gekennzeichnet**, dass der Systembus nur aus seriellen Hochgeschwindigkeitsbussen (SB1, SBn-1, SBn) größerer oder großer Anzahl besteht, dass die seriellen Hochgeschwindigkeitsbusse (SB1, SBn-1, SBn) parallel zueinander angeordnet sind, und dass die Cache-Speicher aufweisenden Prozessor-Systemkomponenten (PSKl, PSKm, SSK) jeweils an jeden seriellen Hochgeschwindigkeitsbus (SB1, SBn-1, SBn) angeschlossen sind und jeweils für jeden seriellen Hochgeschwindigkeitsbus (SB1, SBn-1, SBn) Mittel zur Aufrechterhaltung der Konsistenz der Inhalte der Cache-Speicher aufweisen.

2. Multiprozessorsystem nach Anspruch 1, **dadurch gekennzeichnet**, dass die Prozessor-Systemkomponenten (PSKl, PSKm, SSK) in einer Anzahl von 100 und mehr vorgesehen sind.

3. Multiprozessorsystem nach einem der vorherigen Ansprüche, **dadurch gekennzeichnet,** dass die Mittel zur Aufrechterhaltung der Konsistenz der Inhalte der Cache-Speicher der Prozessor-Systemkomponenten (PSKl, PSKm, SSK) durch nach dem "Snoopy"-Prinzip arbeitende Einrichtungen gebildet sind.

## Claims

1. Multiprocessor system having a system bus which contains at least one serial high-speed bus and having system components which are respectively connected to the system bus and to some extent comprise processor system components which have cache memories and contain means for maintaining the consistency of the contents of the cache memories when memory access operations take place via the system bus, characterized in that the system bus comprises only serial high-speed buses (SB1, SBn-1, SBn) in a relatively large or a large number, in that the serial high-speed buses (SB1, SBn-1, SBn) are arranged in parallel with one another, and in that the processor system components (PSK1, PSKm, SSK) which have cache memories are each connected to every serial high-speed bus (SB1, SBn-1, SBn) and, for every serial high-speed bus (SB1, SBn-1, SBn), each have means for maintaining the consistency of the contents of the cache memories.

2. Multiprocessor system according to Claim 1, characterized in that the number of processor system components (PSK1, PSKm, SSK) provided is 100 or more.

3. Multiprocessor system according to one of the preceding claims, characterized in that the means for maintaining the consistency of the contents of the cache memories in the processor system components (PSK1, PSKm, SSK) are formed by devices operating on the basis of the "Snoopy" principle.

## Revendications

1. Système multiprocesseur comportant un bus de système qui contient au moins un bus série à grande vitesse et comportant des composants de système qui sont raccordés chacun au bus de système et qui sont constitués en partie de composants de système processeurs comportant des antémémoires et contenant des moyens pour maintenir la cohérence des contenus des antémémoires lors d'accès en mémoire s'effectuant par l'intermédiaire du bus de système, caractérisé par le fait que le bus de système est constitué seulement d'un grand ou très grand nombre de bus série à grande vitesse (SB1, SBn-1, SBn), les bus série à grande vitesse (SB1, SBn-1, SBn) sont agencés en parallèle les uns des autres et les composants de système processeurs (PSK1, PSKm, SSK) comportant des antémémoires sont raccordés chacun à chaque bus série à grande vitesse (SB1, SBn-1, SBn) et comportent chacun pour chaque bus série à grande vitesse (SB1, SBn-1, SBn) des moyens pour maintenir la cohérence des contenus des antémémoires.

2. Système multiprocesseur selon la revendication 1, caractérisé par le fait qu'on prévoit un nombre de 100 ou plus composants de système processeurs (PSK1, PSKm, SSK).

3. Système multiprocesseur selon l'une des revendications précédentes, caractérisé par le fait que les moyens pour maintenir la cohérence des contenus des antémémoires des composants de système processeurs (PSK1, PSKm, SSK) sont formés par des dispositifs fonctionnant selon le principe "Snoopy".
